# EUROPÄISCHE PATENTSCHRIFT

(11) **EP 1 306 149 B1**
(45) Veröffentlichungstag und Bekanntmachung des Hinweises auf die Patenterteilung: **20.09.2006**
(21) Anmeldenummer: 02022366.5
(22) Anmeldetag: 09.10.2002
(51) Int. Cl.: B23B 5/16, B23D 21/10

(54) **Schälgerät mit schwenkbarem Schälkopf**
Peeling apparatus with pivoting peeling head
Dispositif de décroutage à tête de décroutage pivotante

(30) Priorität: 26.10.2001 DE 10152910
(43) Veröffentlichungstag der Anmeldung: 02.05.2003
(73) Patentinhaber: PF Schweisstechnologie GmbH, 36304 Alsfeld (DE)
(72) Erfinder: Merle, Bernd, 36304 Alsfeld (DE)
(74) Vertreter: Eisenführ, Speiser & Partner

(56) Entgegenhaltungen:
- DE-A- 3 529 527
- FR-A- 2 306 814
- FR-A- 2 570 007
- GB-A- 1 487 033

## Beschreibung

Die Erfindung betrifft ein Schälgerät für rohrförmige Gegenstände, insbesondere für Kunststoffrohre, gemäß dem Oberbegriff des Anspruchs 1.

Die Oberflächen von Rohren, Kabeln oder zylindrischen Stangen müssen vor einer Weiterverarbeitung häufig bearbeitet werden. So ist es beispielsweise bei Kabeln notwenig, eine Isolationsschicht zu entfernen, während bei der Verschweißung von Kunststoffrohren vor dem Verschweißen die Oberfläche der Rohre abgeschabt werden muss. Hierbei wird eine Schicht in der Größenordnung von ca. 0,05 mm bis 0,3 mm (in Abhängigkeit von großen Rohren auch tiefer) in den miteinander zu verschweißenden Bereichen entfernt. Auf diese Weise werden Schmutzeinschlüsse aus dem Herstellungsprozess sowie alterungsbedingte Materialveränderungen, die beispielsweise durch UV-Schädigung oder Witterung an der Oberfläche auftreten können, entfernt, die sonst zu unzureichenden Schweißergebnissen führen würden.

Um eine möglichst dünne Oberflächenschicht von dem zu bearbeitenden Gegenstand exakt entfernen zu können, muss die Schnitttiefe des Messers genau einjustiert werden. Dieses Einjustieren des Messers, das bei einer Veränderung der Schnitttiefe sowie bei einem Messerwechsel notwenig ist, erfordert Geschicklichkeit und große Erfahrung des Bedieners. Wird das Messer falsch ausgerichtet, so wird häufig eine nur unzureichende Bearbeitungsqualität erzielt. Von den zu bearbeitenden Gegenständen wird dann entweder zuviel Material abgenommen, wodurch beispielsweise bei Rohren ggf. der Restquerschnitt in unzulässiger Weise verringert wird, oder es werden die durch Schmutzeinschlüsse oder Alterung geschädigten Oberflächenschichten nicht vollständig entfernt. Wird das Messer schräg ausgerichtet so ist es möglich, dass an dem zu schälenden Gegenstand unerwünschte Riefen oder Rillen zurückbleiben, die das Schweißen beeinträchtigen können.

Rohrrollbundware weist herstellungsbedingt eine gewisse Ovalität auf, die auch bei Rohrstangenware durch längere Lagerungszeiten auftritt. Diese Ovalität von Rohren ist beim Schälen unerwünscht, da bei einem fest eingestellten Abstand zwischen der Abstützeinheit und der Schäleinheit mit dem daran angeordneten Messer der Spanabhub unregelmäßig und unsauber wird, so dass keine zufriedenstellenden Bearbeitungsergebnisse erzielt werden können. In Extremfällen können Bereiche des Rohres unbearbeitet bleiben, während andere Bereiche des Rohres unzulässig tief abgeschält werden.

Zum Entfernen einer Oberflächenschicht von Rohren oder ähnlichem ist aus der DE 93 05 220 U ein Schälgerät der eingangs genannten Art bekannt, dessen Schälmesser fest mit dem Schälkopf verbunden ist. Bei diesem Schälgerät muss die Schnitttiefe des Schälmessers genau einjustiert werden, um eine möglichst dünne Oberflächenschicht von dem zu bearbeitenden Gegenstand exakt abschaben zu können. Dieses Einjustieren wird bei jeder Veränderung der Schnitttiefe sowie bei einem Messerwechsel notwendig, um zu vermeiden, dass durch eine falsche Ausrichtung des Schälmessers eine nur unzureichende Bearbeitungsqualität erzielt wird. Infolge der starren Verbindung des Schälmessers mit dem Schälkopf und damit mit dem Führungselement in Form einer Rolle kann das Schälmesser bei verformten Gegenständen, insbesondere bei an dem zu schälenden Gegenstand vorhandenen Erhebungen und Vertiefungen aus dem Material herausgehoben werden, so dass ungeschälte Stellen an dem zu schälenden Gegenstand verbleiben.

Aus der europäischen Patentanmeldung 01 113 726 geht weiterhin ein Schälgerät hervor, das gegenüber dem in dem deutschen Gebrauchsmuster 93 05 220 beschriebenen Schälgerät dahingehend verbessert worden ist, dass die Messerbaugruppe mit dem Schälmesser federnd und kippbar ausgebildet ist. Weiterhin ist ein Federelement zum Ovalitätsausgleich vorgesehen. Daher kann mit diesem bekannten Schälgerät bei leicht verformten Gegenständen ein zufriedenstellendes Schälergebnis erzielt werden.

Jedoch bleiben bei stark verformten Rohren auch bei diesem Schälgerät ungeschälte Stellen zurück. Dies ist darauf zurückzuführen, dass die notwendigen Gleitschuhe das gefederte Messer an Erhebungen oder Vertiefungen aufweisenden Stellen aus dem zu schälenden Material herausheben.

Es ist Aufgabe der vorliegenden Erfindung, ein Schälgerät der eingangs genannten Art bereitzustellen, das auch bei stark verformten rohrförmigen Gegenständen ein Abschälen der Außenhaut dieses Gegenstandes in zufriedenstellender Weise, insbesondere ohne ungeschälte Stellen erlaubt.

Die vorstehende Aufgabe wird durch die Merkmale des Anspruchs 1 gelöst. In den sich daran anschließenden Ansprüchen 2 bis 10 finden sich vorteilhafte Ausgestaltungen hierzu ebenso wie in der übrigen Beschreibung.

Durch die Verschwenkbarkeit des Schälkopfes gegenüber der Schälkopfeinheit wird ermöglicht, dass das oder die Führungselemente der Führungsbaugruppe tangential zur Oberfläche ausgerichtet sind und somit das Schälmesser immer in das Material des zu schälenden rohrförmigen Gegenstandes eindringen kann. Damit ist es möglich, selbst bei stark verformten rohrförmigen Gegenständen einen Schälvorgang an Einbuchtungen oder Erhebungen an diesem Gegenstand vornehmen zu können.

Damit der Schälkopf in seine Ausgangsstellung zurückkehrt, ist es weiterhin von Vorteil, dass der Schälkopf in eine Grundstellung elastisch, vorzugsweise durch wenigstens ein Federelement vorgespannt ist. Als Federelement kann beispielsweise eine Schraubenfeder verwendet werden.

Weiterhin können Anschläge, insbesondere an der Schäleinheit zur Begrenzung der Schwenkbewegung des Schälkopfes vorgesehen sein.

Um einen möglichst großen Schwenkradius zu erzielen, ist es weiterhin von Vorteil, wenn die Schwenkachse in Richtung parallel zu der von der Abstützeinheit und der Schäleinheit aufgespannten Ebene beabstandet zu dem Kontaktbereich der Führungsbaugruppe mit dem zu schälenden Gegenstand vorzugsweise an der Schäleinheit angeordnet ist. Als Kontaktbereich wird hierbei derjenige Kontaktpunkt bzw. diejenige Kontaktlinie oder Kontaktfläche der Führungsbaugruppe verstanden, mit dem bzw. mit der die Führungsbaugruppe an dem zu schälenden Gegenstand anliegt.

Um eine präzise Führung des Schälmesser während des Schälvorganges zu erzielen, kann weiterhin vorgesehen sein, dass die Führungsbaugruppe des Schälkopfes mindestens zwei in Schälrichtung hintereinander angeordnete Führungselemente aufweist, und dass die Schwenkachse zwischen den beiden Führungselementen, vorzugsweise mittig hierzu angeordnet ist. In diesem Fall können die beiden Führungselement beispielsweise durch Rollen gebildet sein, die in einer Linie hintereinander, bezogen in Schälrichtung, angeordnet sind.

Neben der vorstehend skizzierten Lösung mit zwei Führungselementen besteht auch die Möglichkeit, dass die Führungsbaugruppe des Schälkopfes zwei Paare an Führungselementen aufweist, deren Anbringungspunkte an dem Schälkopf ein Rechteck aufspannen, und dass die Schwenkachse zwischen den beiden Führungselementpaaren, vorzugsweise mittig hierzu angeordnet ist.

Ist der Abstand zwischen den in Schälrichtung hintereinander angeordneten Führungselementen der Führungsbaugruppe des Schälkopfes so eingestellt, dass er so klein wie möglich ist, ohne dass die Führungselemente in ihrer Funktionsfähigkeit beeinträchtigt sind, wird das Schälergebnis auch durch kleinste Erhebungen und Vertiefungen an dem zu schälenden Gegenstand nicht negativ beeinflusst, da die Führungselemente und damit das Schälmesser diesen Erhebungen und Vertiefungen folgen können.

Für die Abstützeinheit können unterschiedliche Lösungen vorgesehen sein. Eine sehr einfache und damit kostengünstige Lösung kann beispielsweise dadurch realisiert werden, dass die Abstützeinheit mindestens zwei entlang eines Kreisbogens zueinander beabstandete Gleitelemente enthält, die mit einem reibungsarmen Belag beschichtet sind. Um den rohrförmigen Gegenstand ohne hohen Kraftaufwand schälen zu können, kann auch vorgesehen sein, dass die Abstützeinheit wenigstens zwei, vorzugsweise vier zueinander beabstandete Führungselemente aufweist, die auf einem ihnen gemeinsamen Kreisbogen angeordnet sind.

Wie bereits oben erwähnt worden ist, können die Führungselemente beispielsweise durch Gleitelemente gebildet sein. Ebenfalls zur Unterstützung eines kraftarmen Schälvorganges ist es von Vorteil, wenn die Führungselemente der Abstützeinheit und/oder der Schäleinheit durch frei drehbare Führungsrollen gebildet sind, deren Rollenachsen zumindest annähernd parallel zu der Schwenkachse verlaufen.

Um mit dem erfindungsgemäßen Schälgerät rohrförmige Gegenstände mit unterschiedlichen Durchmessern schälen zu können, kann weiterhin vorgesehen sein, dass die Schäleinheit und/oder die Abstützeinheit entlang der Trageinheit zum Einstellen des Abstandes zwischen der Schäleinheit und der Abstützeinheit verschiebbar angeordnet sind. Damit die Verschiebbarkeit ermöglicht wird, kann weiterhin vorgesehen sein, dass die Trageinheit einen Spindeltrieb zum Einstellen des Abstandes zwischen der Schäleinheit und der Abstützeinheit aufweist. Dabei kann der Spindeltrieb eine mit einer schlitzförmigen Öffnung versehene Spindelführung und eine darin drehbare Spindel mit Betätigungsgriff umfassen.

Hierbei kann die Schäleinheit und/oder die Abstützeinheit einen Gewindeabschnitt aufweisen, über den sie durch einen Schnappverschluss mit der Spindel in lösbaren Eingriff bringbar sind. Dies ermöglicht es, zur Grobverstellung des Abstands zwischen der Abstützeinheit und der Schäleinheit den Gewindeabschnitt von der Spindel zu lösen und diesen Abstand ohne Betätigung der Spindel an den Durchmesser des zu bearbeitenden Gegenstandes anzupassen. Die Feinjustierung des Abstands zwischen der Abstützeinheit und der Schäleinheit kann dann durch Betätigung der Spindel erfolgen, wenn der Gewindeabschnitt der Schäleinheit oder der Abstützeinheit in die Spindel eingreift.

Weiterhin kann vorgesehen sein, dass der Schnappverschluss eine Feder aufweist, die den Schnappverschluss in einer ersten, geschlossenen Position so beaufschlagt, dass der Gewindeabschnitt der Schäleinheit bzw. der Abstützeinheit in die Spindel eingreift, wobei der Schnappverschluss gegen die Kraft der Feder in eine zweite, geöffnete Position überführbar ist, in der der Gewindeabschnitt der Schäleinheit bzw. der Abstützeinheit außer Eingriff mit der Spindel ist. Durch die Kraft der Feder wird der Gewindeabschnitt gegen die Spindel gedrückt, so dass die Schäleinheit und die Abstützeinheit nur durch eine Betätigung der Spindel relativ zueinander bewegbar sind. Erst durch Betätigung des Schnappverschlusses gegen die Federkraft ist es möglich, die Verbindung zwischen dem Gewindeabschnitt und der Spindel zu lösen, um die Schäleinheit bzw. die Abstützeinheit frei entlang der Spindelführung zu verschieben. Es kann auf diese Weise sichergestellt werden, dass sich der Gewindeabschnitt nicht während der Bearbeitung eines Gegenstandes durch das Schälgerät aus der Spindel löst und sich somit der Abstand zwischen der Abstützeinheit und der Schäleinheit verstellt.

Vorzugsweise weist der Schnappverschluss einen um eine Achse schwenkbaren Hebel auf, an dessen der Schäleinheit abgewandtem Ende der mit der Spindel eingreifende Gewindeabschnitt ausgebildet ist und an dessen der Schäleinheit zugewandtem Ende die den Hebel beaufschlagende Feder und ein aus der Schäleinheit bzw. der Abstützeinheit herausragender Bereich vorgesehen ist, durch den der Hebel gegen die Federkraft manuell betätigbar ist, um den Schnappverschluss in seine geöffnete Position zu überführen. Durch die Anordnung des Gewindeabschnitts an dem der Schäleinheit abgewandten Ende des Hebels kann sichergestellt werden, dass der Gewindeabschnitt des Hebels zusätzlich zu der ihn beaufschlagenden Federkraft durch das Einspannen des zu schälenden Gegenstands zwischen der Abstützeinheit und der Schäleinheit gegen die Spindel gepresst wird. Gleichzeitig ist der Schnappverschluss durch den aus der Schäleinheit bzw. der Abstützeinheit herausragenden Bereich manuell leucht betätigbar, so dass einfach zwischen der Grobeinstellung und der Feinjustierung des Abstands zwischen der Abstützeinheit und der Schäleinheit gewechselt werden kann.

Weiterhin ist erfindungsgemäß vorgesehen, dass in dem Spindeltrieb an wenigstens einem Ende zwischen der Spindel und der Spindelführung ein elastisches Element angeordnet ist. Die Spindel wird dadurch unter einer Vorspannung in der Spindelführung gehalten. Diese Vorspannung wird von der Spindel über den Gewindeabschnitt auf die Schäleinheit bzw. die Abstützeinheit übertragen. Rundheitsabweichungen, wie Ovalitäten oder ähnliches, des zu bearbeitenden Gegenstandes können so durch das Schälgerät ausgeglichen werden, ohne dass der Abstand zwischen der Abstützeinheit und der Schäleinheit während der Bearbeitung nachjustiert werden muss. Die Handhabung des Schälgerätes wird dadurch vereinfacht und gleichzeitig kann das Bearbeitungsergebnis deutlich verbessert werden.

In Weiterbildung der Erfindung wird vorgeschlagen, dass an dem dem Betätigungsgriff abgewandten Ende der Spindel ein mit dieser verbundenes und wenigstens bereichsweise in die Spindelführung hinein bewegbaren Indikatorelement vorgesehen ist. Wird die Spindel beim Einspannen eines zu bearbeitenden Gegenstandes zwischen der Abstützeinheit und der Schäleinheit gegen die Kraft des oder der elastische Elemente in der Spindelführung verschoben, so wird auch das mit der Spindel verbundene Indikatorenelement bewegt, welches im unbelasteten Zustand der Spindel aus der Spindelführung hinausragt. Die Federkonstante der elastischen Axiallagerung der Spindel kann dabei so gewählt werden, dass sich bei einer definierten Vorspannkraft der Spindel das Indikatorelement an einer bestimmten Position befindet, also beispielsweise bündig mit der Spindelführung abschließt. Über die Position des Indikatorenelements kann so die Vorspannkraft der Spindel abgelesen werden. Ein Benutzer kann mit Hilfe des Indikatorenelements leicht eine optimale Vorspannung der Spindel einstellen, um somit eine gute Bearbeitungsqualität zu erzielen.

Weiterhin ist vorgesehen, dass die Führungsbaugruppe des Schälkopfes einen Lagerblock aufweist, an dem das wenigstens eine Führungselement vorzugsweise federnd gelagert ist und der vorzugsweise an dem Schälkopf um eine zu der Schwenkachse senkrechte und exzentrisch, bezogen auf die Mitte des Lagerblockes, angeordnete Achse frei schwenkbar befestigt ist. Durch die Bewegung des Schälgerätes um den zu schälenden zylinderförmigen Gegenstand herum kann die Achse des Lagerblocks relativ zu der Achse des zu schälenden Gegenstandes, die zumindest annähernd parallel zu der Schwenkachse verläuft, verschwenkt werden, so dass das Schälgerät in einer schraubenförmigen Bewegung um den zylinderförmigen Gegenstand bewegt wird. Bei einer Richtungsumkehr der Bewegungsrichtung des Schälgerätes schwenkt auch der frei drehbar gelagerte Lagerblock, so dass bei einer abwechselnden Bewegung des Schälgerätes um den halben Umfang des zylinderförmigen Gegenstandes das Schälgerät immer die gleiche axiale Richtung weiter bewegt wird. Mit dem erfindungsgemäßen Schälgerät ist es somit möglich, auch den für Anbohrschellen oder Rohrabgänge erforderlichen Bereich eines zylinderförmigen Gegenstandes zu schälen, ohne den kompletten Umfang des Gegenstandes bearbeiten zu müssen. Bei gleichbleibender Bearbeitungsqualität kann somit die Zeit zu Bearbeitung eines zylinderförmigen Gegenstandes deutlich reduziert werden, wenn nur die geforderten Bereiche abgeschabt werden. Da der Drehpunkt des Lagerblocks außerhalb seiner Mitte liegt, schwenkt der gesamte Lagerblock bei einer Bewegung des Schälgerätes automatisch in eine Position, die einen axialen Vorschub des Schälgerätes auf den zu schälenden Gegenstand bewirkt.

Weiterhin ist vorgesehen, dass der Lagerblock federnd an dem Schälkopf befestigt ist. Dadurch kann ein konstanter Anpressdruck des Führungselements an dem zu schälenden Gegenstand erzielt werden.

Alternativ hierzu ist es möglich, das wenigstens eine Führungselement selbst federnd in dem Lagerblock zu lagern. Auf diese Weise kann ebenfalls ein konstanter Anpressdruck des Führungselements an dem zu schälenden Gegenstands erreicht werden, so dass durch die hohe Führungsgenauigkeit eine gute Bearbeitungsqualität erzielt wird.

Nach einer bevorzugten Ausführungsform der Erfindung ist vorgesehen, dass das wenigstens eine Führungselement in wenigstens einer Winkelposition zu der Achse des zu schälenden, zylinderförmigen Gegenstands ausrichtbar und fixierbar ist. Die Steigung der Schraubenbewegung, mit der das Schälgerät um den zu bearbeitenden Gegenstand bewegt wird, kann somit fest eingestellt werden. Ein Bearbeiter kann dadurch sicherstellen, dass die Schnittbreite des Schälmessers durch die Steigung nicht überschritten wird, so dass eine hohe Bearbeitungsqualität erzielbar ist. Für unterschiedlich große Durchmesser der zu bearbeitenden Gegenstände ist die Steigung über die Schrägstellung der Achsen der Führungsrollen so einstellbar, dass eine optimale Schnittbreite erzielt werden kann.

In Weiterbildung der Erfindung wird bevorzugt, dass an dem Lagerblock mindestens eine Feststellschraube zur Fixierung des Lagerblocks relativ zu der Messerbaugruppe vorgesehen ist. Durch eine Feststellschraube kann der Lagerblock schnell und effektiv relativ zu dem Schälkopf ausgerichtet und fixiert werden. Auch eine Änderung der Ausrichtung des Lagerblocks zu dem Schälkopf kann zügig erfolgen, beispielsweise wenn ein Gegenstand mit einem anderen Durchmesser bearbeitet werden soll, oder wenn die Messerbreite variiert wird. In diesem Zusammenhang ist zu bemerken, dass der Lagerblock selbstverständlich auch von Haus aus starr mit der Messerbaugruppe verbunden sein kann.

Erfindungsgemäß ist es vorgesehen, dass an dem Schälkopf zwei Vorsprünge ausgebildet sind, zwischen denen der Lagerblock schwenkbar ist. So lässt sich vermeiden, dass der Lagerblock unzulässig weit verschwenkt wird und eine exakte Führung des Schälgerätes an dem zu bearbeitenden Gegenstand dadurch unmöglich wird. Vorzugsweise ist der Bereich, in dem der Lagerblock schwenkbar ist, einstellbar, so dass das Schälgerät an unterschiedlichen Steigungen angepasst werden kann.

Nach einer weiteren Ausführungsform weist die Messerbaugruppe ein Schälmesser auf, das eine in einem Gleitschuh aufgenommene, mit diesem einstückig ausgebildete Klinge besitzt, wobei der Gleitschuh an dem Schälkopf lösbar befestigt ist. Der Gleitschuh liegt damit an dem zu schälenden Gegenstand an und ermöglicht somit eine gute Führung der Klinge des Schälmessers an dem zu schälenden Gegenstand. Auf diese Weise kann eine besonders gleichmäßige Schnitttiefe und damit eine konstante Bearbeitungsqualität erzielt werden. Zudem bringt die einstückige Ausgestaltung des Gleitschuhs mit der Klinge den Vorteil mit sich, dass das umständliche Einjustieren des Messers entfällt. Die Klinge wird schon bei der Fertigung im richtigen Winkel zu dem Gleitschuh ausgerichtet und mit diesem verbunden, so dass der die Klinge tragende Gleitschuh nur noch an dem Schälkopf befestigt werden muss.

Vorzugsweise weist der Gleitschuh zwei durch eine Ausnehmung voneinander beabstandeten Gleitflächen auf. Diese Gleitflächen liegen an dem zu bearbeitenden Gegenstand an und führen die Klingen des Schälmessers. Ein Verkanten der Klinge des Schälmessers kann dadurch vermieden werden, dass an dem Gleitschuh nicht nur eine, sondern zwei Gleitflächen vorgesehen sind, die von einander beabstandet sind. Liegen diese beiden Gleitflächen gleichzeitig an dem zu bearbeitenden Gegenstand an, so wird durch das erfindungsgemäße Schälgerät eine hohe Bearbeitungsgenauigkeit erreicht.

In Weiterbildung der Erfindung ist vorgesehen, die Klinge des Schälmessers in der Ausnehmung des Gleitschuhs anzuordnen, wobei die Klinge bereichsweise über die Gleitfläche des Gleitschuhs hinausragt. Die Klinge des Schälmessers wird somit zwischen den beiden Gleitflächen des Gleitschuhs geführt. Ein Verkanten der Klinge auf dem zu schälenden Gegenstand kann auf diese Weise vermieden werden.

Nach einer bevorzugten Ausführungsform der Erfindung ist die Klinge mit dem Gleitschuh über eine Schraubverbindung an dem Schälkopf befestigt. Das Auswechseln der Klinge mit dem Gleitschuh ist dadurch mit einfachen Mitteln schnell durchführbar. Zur Befestigung der Klinge mit dem Gleitschuh an dem Schälkopf ist vorzugsweise nur eine einzige Schraube notwendig.

Alternativ kann hierzu vorgesehen sein, dass die Klinge mit dem Gleitschuh über eine Rastverbindung an dem Schälkopf befestigt ist. Dadurch kann die Montage oder Demontage der Klinge mit dem Gleitschuh an dem Schälkopf nochmals erleichtert werden, da die Klinge über die Rastverbindung ohne Zuhilfenahme von Werkzeugen an dem Schälkopf befestigbar und lösbar ist. Die Bedienung des erfindungsgemäßen Schälgeräts wird auf diese Weise deutlich erleichtert.

Vorzugsweise ist die Klinge eine an zwei Seiten angeschliffene Wendeklinge. Das Schälmesser des erfindungsgemäßen Schälgerätes stellt somit gleichzeitig eine Ersatzklinge bereit. Die Anzahl der vorzuhaltenden Ersatzteile für das Schälgerät kann auf diese Weise gesenkt werden. Die Herstell- und Betriebskosten des Schälgeräts bleiben somit niedrig. Mit der Wendeklinge kann auch erreicht werden, dass mit einer einzigen Klinge zwei unterschiedliche Schnitttiefen erzielbar sind, wenn die beiden angeschliffenen Seiten der Wendeklinge unterschiedlich weit über die Gleitflächen des Gleitschuhs hinausragen.

Nach einer weiteren Ausführungsform der Erfindung ist der Gleitschuh in einem Messerhalter federnd und/oder kippbar an dem Schälkopf befestigt. Rundheitsabweichungen, wie Ovalitäten oder ähnliches, des zu bearbeitenden Gegenstandes können somit ebenso wie Ungenauigkeiten in axialer Richtung durch das erfindungsgemäße Schälgerät ausgeglichen werden, ohne dass der Abstand zwischen der Abstützeinheit und dem Schälmesser während der Bearbeitung nachjustiert werden muss. Es kann so die Handhabung des Schälgeräts vereinfacht und gleichzeitig das Bearbeitungsergebnis deutlich gesteigert werden. Durch die Vorspannung des Messers wird zudem ein gleichmäßiger Anpressdruck erzielt, der eine konstante Bearbeitungsqualität auch bei längerem Betrieb des Schälgerätes sicherstellen kann. Die Kippbarkeit des Gleitschuhs verhindert ebenfalls eine Verkantung oder Schrägstellung der Klinge, so dass Riefen und ähnliches vermieden werden.

Erfindungsgemäß ist es vorgesehen, dass der Messerhalter um einen Bolzen schwenkbar und durch wenigstens zwei Federn beaufschlagt in dem Schälkopf gelagert ist. Die Konstruktion des Gleitschuhs mit der Klinge kann auf diese Weise einfach gehalten werden, da die federnde Lagerung des Gleitschuhs in dem Schälkopf untergebracht ist, in dem ausreichend Bauraum hierfür zur Verfügung steht. Auch ein Auswechseln des Gleitschuhs kann auf diese Weise vereinfacht werden, da nicht die gesamte federnde Lagerung mit ausgewechselt werden muss, sonder nur die Befestigung des Gleitschuhs an dem federnd gelagerten Messerhalter gelöst werden muss. Die Handhabung des erfindungsgemäßen Schälgeräts wird auf diese Weise deutlich erleichtert.

Neben der Schwenkbewegung um die Schwenkachse kann der Schälkopf noch um eine weitere Schwenkachse bzw. Kippachse schwenk- bzw. kippbar ausgebildet sein. Diese weitere Schwenk- bzw. Kippachse verläuft im wesentlichen parallel zu der von der Abstützeinheit und der Schäleinheit aufgespannten Ebene, d. h. diese Kippachse verläuft tangential zu dem zu schälenden Gegenstand. Diese weitere Schwenk- bzw. Kippmöglichkeit, die auch unabhängig von der Schwenkmöglichkeit des Schälkopfes um die senkrecht zu der von der Schäleinheit und der Abstützeinheit verlaufenden Schwenkachse vorgesehen sein kann, ist insbesondere dann vorteilhaft, wenn der zu schälende Gegenstand eine leichte Krümmung entlang seiner Mittellängsachse aufweist.

Für die Ausgestaltung der weiteren Schwenk- bzw. Kippachse kann weiterhin vorgesehen sein, dass die Schwenkachse in dem Tragarm in Form einer Waage gelagert ist oder dass die weitere Schwenk- bzw. Kippachse zusammen mit der Schwenkachse ein Kreuzgelenk bilden. Der Tragarm ist dann mit entsprechenden Bohrungen zu versehen, die diese zusätzliche Bewegungsmöglichkeit eröffnet. Weiterhin besteht die Möglichkeit, dass die weitere Schwenk- bzw. Kippachse gegenüber der zuerst genannten Schwenkachse einen größeren Durchmesser aufweist, wobei letztere die Kippachse durchsetzt und die Bohrung für letztere (= Schwenkachse) einen Durchmesser aufweist, der größer ist als der Durchmesser der Schwenkachse. Schließlich kann an Stelle der weiteren Schwenk- bzw. Kippachse oder beider Schwenkachsen ein elastisches Element, beispielsweise aus Gummi vorgesehen sein.

Weitere vorteilhafte Ausgestaltungen sowie ein Ausführungsbeispiel werden nachstehend anhand der Zeichnungsfiguren näher erläutert. Hierbei ist zu bemerken, dass sich die im Zusammenhang mit der Erläuterung des Ausführungsbeispiels verwendeten Begriffe "links", "rechts", "unten" und "oben" auf die Zeichnungsfiguren mit normal lesbaren Figurenbezeichnungen und Bezugszeichen beziehen.

In den Zeichnungsfiguren sind:
- Fig. 1: eine schematische Ansicht von vorne auf das erfindungsgemäße Schälgerät;
- Fig. 2: eine Teilschnittansicht entlang der Linie II in Fig. 1;
- Fig. 3: eine vergrößerte, teilweise aufgebrochene Darstellung des Bereiches III in Fig. 1;
- Fig. 4: eine vergrößerte, teilweise aufgebrochene Darstellung des Bereiches IV in Fig. 1; und
- Fig. 5: eine vergrößerte, teilweise aufgebrochene Darstellung des Bereiches V in Fig. 1.

Das erfindungsgemäße Schälgerät weist als wesentliche Bau- und Funktionseinheiten eine Abstützeinheit 10, eine Schäleinheit 40 und eine Trageinheit 70 auf. An der Trageinheit 70 sind die Abstützeinheit 10 sowie die Schäleinheit 40 in der Weise gehalten, dass die Abstützeinheit 10 und die Schäleinheit 40 einen Abstand zueinander aufweisen und zwischen sich eine Ebene aufspannen, in der während des Gebrauchs des Schälgeräts der zu schälende Gegenstand R angeordnet ist. Bei dem dargestellten Ausführungsbeispiel ist der zu schälende Gegenstand R ein Kunststoffrohr.

Zum Einstellen des Abstandes zwischen der Abstützeinheit 10 und der Schäleinheit 40 ist die Trageinheit 70 mit einem nachstehend noch näher erläuterten Spindeltrieb versehen. Der Abstand zwischen der Abstützeinheit 10 und der Schäleinheit 40 wird dabei durch den Durchmesser des zu schälenden, rohrförmigen Gegenstandes R bestimmt.

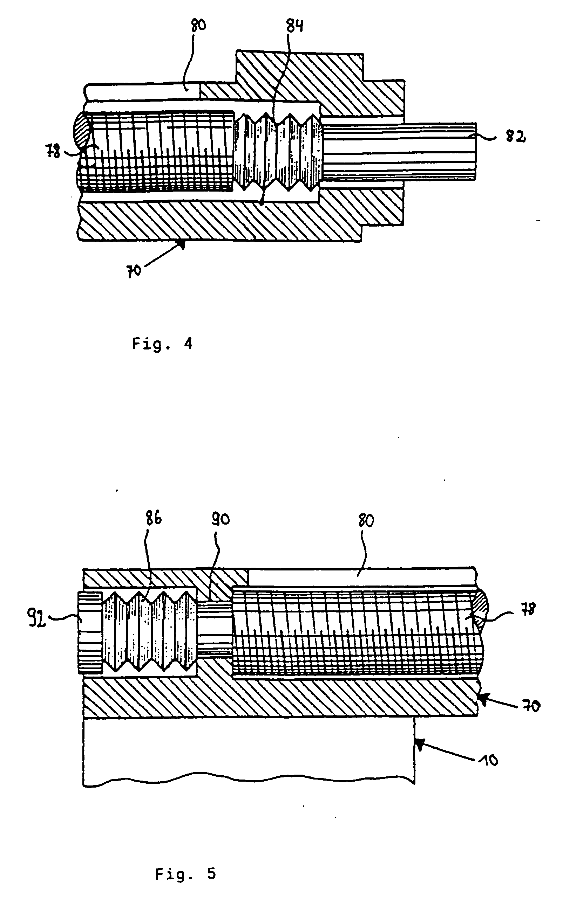

Die Abstützeinheit 10 weist zunächst einen Tragarm 12 auf, welcher annähernd die Form eines Kreisbogens besitzt. An dem linken Ende des Tragarmes 12 kann der Tragarm 12 mit einer Erweiterung 14 versehen sein, an dem entsprechende Elemente zum Eingriff mit dem Spindeltrieb der Trageinheit 70 angeordnet sind, wie dies nachstehend im Zusammenhang mit der Fig. 5 erläutert wird.

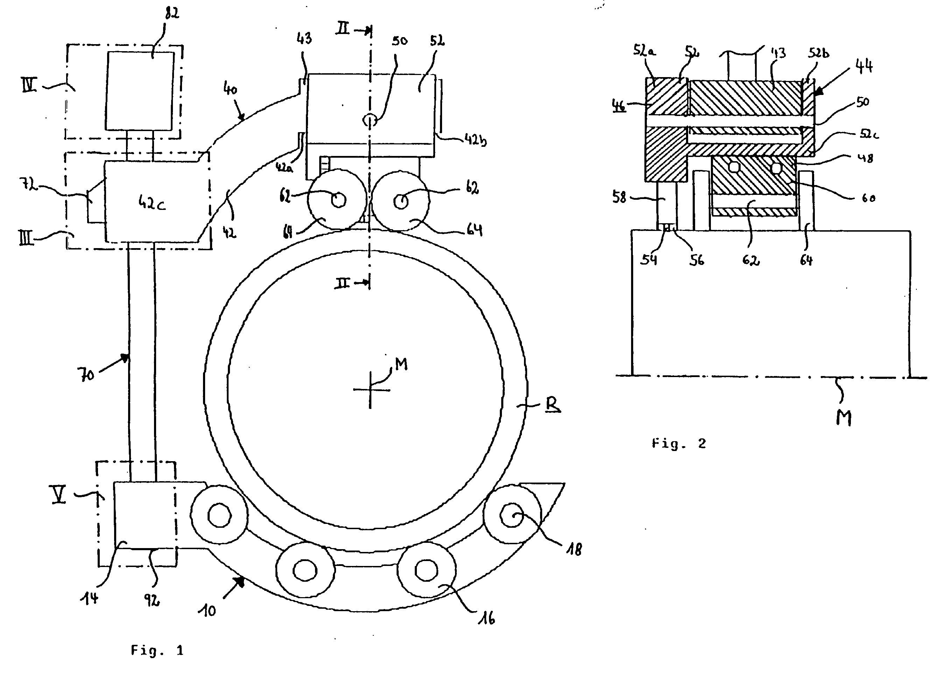

An dem Tragarm 12 sind insgesamt vier Führungsrollenpaare 16 frei drehbar an Achsen 18 angeordnet. Die Achsen 18 verlaufen senkrecht zu der zwischen der Abstützeinheit 10 und der Schäleinheit 40 aufgespannten Ebene bzw. parallel zur Mittellängsachse M des zu schälenden rohrförmigen Gegenstandes R. Wie aus Fig. 1 hervorgeht, sind die Achsen 18 äquidistant entlang des Tragarmes 12 in der Weise angeordnet, dass die Mittellängsachsen bzw. die Mittelpunkte der Achsen 18 auf einem gemeinsamen Kreisbogen liegen.

Die Schäleinheit 40 enthält ebenfalls einen Tragarm 42, mit dem die Schäleinheit 40 an der Trageinheit 70 in einer nachstehend noch beschriebenen Weise gehalten ist. Der Tragarm 42 besitzt ebenfalls annähernd die Form eines Kreisbogens, wobei an seinem der Trageinheit 70 abgewandten, freien Ende eine im Querschnitt quaderförmige Abkröpfung 43 vorgesehen ist, an der ein Schälkopf 44 der Schäleinheit 40 schwenkbar gelagert ist.

Weiterhin weist die Schäleinheit 40 den Schälkopf 44 auf, der eine Messerbaugruppe 46 und eine Führungsbaugruppe 48 umfasst. Der Schälkopf 44 mit der Messerbaugruppe 46 und der Führungsbaugruppe 48 ist über eine Schwenkachse 50 an der Schäleinheit 40 schwenkbar gehalten. Die Schwenkachse 50 erstreckt sich dabei senkrecht zu der von der Abstützeinheit 10 und der Schäleinheit 40 aufgespannten Ebene, dass heißt bezogen auf Figur 1, senkrecht zu dem Zeichnungsblatt. Weiterhin ist die Schwenkachse 50 in Richtung senkrecht zu der Mittellängsachse M des zu schälenden Gegenstandes R von dem Kontaktbereich der Führungsbaugruppe 48 mit dem Gegenstand R beabstandet.

Die Schwenkachse 50 ist in dem Tragarm 42 der Schäleinheit 40 axialfest und drehfest eingesetzt. Neben einer durchgehenden Schwenkachse können auch an dem Tragarm 42 zwei Zapfen vorgesehen sein, um die der Schälkopf 44 verschwenken kann. Zur Begrenzung der Schwenkbewegung ist der Tragarm 42 im Bereich des Schälkopfes 44 mit zwei Anschlagflächen 42a, 42b versehen.

Neben der Schwenkbewegung um die Schwenkachse 50 kann der Schälkopf 44 noch um eine weitere Schwenkachse bzw. Kippachse schwenk- bzw. kippbar ausgestaltet sein. Diese weitere Schwenk- bzw. Kippachse verläuft im wesentlichen parallel zu der von der Abstützeinheit 10 und der Schäleinheit 40 aufgespannten Ebene. Mit anderen Worten verläuft diese Kippachse tangential zu dem zu schälenden Gegenstand R. Diese weitere Schwenk- bzw. Kippmöglichkeit ist insbesondere dann vorteilhaft, wenn der zu schälende Gegenstand R eine leichte Krümmung entlang seiner Mittellängsachse aufweist. Für die Ausgestaltung der weiteren Schwenk- bzw. Kippachse kann weiterhin vorgesehen sein, dass die Schwenkachse 50 in dem Tragarm 42 in Form einer Waage gelagert ist oder dass die weitere Schwenk- bzw. Kippachse zusammen mit der Schwenkachse 50 ein Kreuzgelenk bilden. Der Tragarm 42 ist dann mit entsprechenden Bohrungen zu versehen, die diese zusätzliche Bewegungsmöglichkeit eröffnet.

Die Messerbaugruppe 46 besitzt einen im Querschnitt U-förmigen Träger 52, der den Tragarm 42 bzw. die Abkröpfung 43 U-förmig umgreift. Wie aus Figur 2 hervorgeht, sind die beiden vertikal verlaufenden Schenkel des U-förmigen Trägers 52 in ihrer Dicke ungleichförmig ausgebildet. Der linke Schenkel 52a ist gegenüber dem rechten Schenkel 52b dicker und trägt die Messerbaugruppe 46.

Die Messerbaugruppe 46 besitzt eine Klinge 54 und einen einstückig mit der Klinge 54 ausgebildeten Gleitschuh 56. Die Klinge 54 mit dem Gleitschuh 56 ist über eine nicht weiter dargestellte Schraubverbindung an dem Träger 52 anbringbar. Der Gleitschuh 54 weist zwei zueinander parallel und voneinander beabstandete Gleitflächen auf. Zwischen den Gleitflächen ist eine Ausnehmung ausgebildet, in der die Klinge 54 positioniert ist. Die Spitze der Klinge 54 ragt über die Gleitflächen des Gleitschuhs 56 hinaus. Die Höhe, die die Klinge 54 über den Gleitschuh 56 hinausragt, wird durch die Abmessungen der Klinge 54 bestimmt. Durch die einstückige Ausbildung der Klinge 54 mit dem Gleitschuh 56 wird der vorbestimmte Abstand zum Schälen des zu bearbeitenden Gegenstandes R, um den die Klinge 54 über den Gleitschuh 56 hinausragt, schon bei der Fertigung eingestellt.

Es ist in diesem Zusammenhang noch zu bemerken, dass die Klinge 54 auch als Wendeklinge ausgebildet sein kann. Eine derartige Wendeklinge ist dabei an zwei gegenüberliegenden Seiten angeschliffen. Über eine ebenfalls nicht weiter dargestellte Schraubverbindung ist die Wendeklinge mit dem Gleitschuh 56 an dem Träger 52 befestigbar. Dabei ist der Gleitschuh 56 ebenfalls durch zwei parallele und voneinander beabstandete Gleitflächen gebildet, die als beidseitige Gleitflächen ausgestaltet sind, zwischen denen ebenfalls eine Ausnehmung vorgesehen ist, in der die Wendeklinge aufgenommen ist. Durch Lösen der nicht weiter dargestellten Schraubverbindung kann die Wendeklinge mit dem Gleitschuh 56 von dem Träger 52 abgenommen werden. Zur weiteren Bearbeitung kann die Wendeklinge mit dem Gleitschuh 56 dann gewendet an dem Träger 52 befestigt werden. Durch die Geometrie der Klinge 54 bzw. der Wendeklinge können unterschiedliche Schnitttiefen eingestellt werden.

Das Schälmesser ist federnd an dem Träger 52 gelagert. Hierzu ist ein Messerhalter 58 vorgesehen, der mittels eines nicht weiter dargestellten Bolzens schwenkbar an dem Träger 52 gelagert ist und den Gleitschuh 56 mit der Klinge 54 trägt. Weiter ist der Messerhalter 58 durch zwei ebenfalls nicht weiter dargestellte Feder beaufschlagt. Wird der Gleitschuh 56 der Klinge 54 während der Bearbeitung eines zu schälenden Gegenstandes R belastet, so wird der Messerhalter 58 in einer Kipp- bzw. Schwenkbewegung um den Bolzen gegen die Kraft der Federn ausgelenkt.

An dem horizontal verlaufenden Schenkel 52c des Trägers 52 ist die Führungsbaugruppe 48 gehalten. Die Führungsbaugruppe 48 besitzt einen quaderförmigen Querschnitt und ist über einen ebenfalls nicht weiter dargestellten, zu der Mitte der Grundfläche des Quaders exzentrisch angeordneten Drehbolzen an dem horizontalen Schenkel 52c des U-förmigen Trägers 52 drehbar gehalten.

Die Führungsbaugruppe 48 weist einen Lagerblock 60 auf, an dem zwei Drehachsen 62, die beabstandet zueinander und senkrecht zu der zwischen der Abstützeinheit 10 und der Schäleinheit 40 aufgespannten Ebene verlaufen, axialfest und drehfest gehalten. Die Drehachsen 62 ragen über den quaderförmigen Lagerblock 60 hinaus, so dass an ihren Enden axial fest, aber drehbar vier Führungsrollen 64 in der Weise anbringbar sind, dass sie ein Rechteck aufspannen und der Lagerblock 60 einen Wagen bildet. Wie aus Figur 1 hervorgeht, ist dabei der Abstand der beiden Drehachsen 62 so gewählt, dass die Führungsrollen 64 einen solchen Abstand zueinander aufweisen, dass sie so dicht wie möglich zueinander angeordnet sind, sich aber noch frei drehen können. Wie weiter aus Fig. 1 hervorgeht, ist die Schwenkachse 50 in der Mitte zwischen den beiden Drehachsen 62 angeordnet.

Wie vorstehend bereits dargelegt worden ist, ist der Lagerblock 60 über einen nicht weiter dargestellten Drehzapfen gehalten, der im Wesentlichen senkrecht zur der Mittellängsachse M des zu schälenden Gegenstandes R bzw. senkrecht zu der Schwenkachse 50 verläuft. Durch zwei ebenfalls nicht weiter dargestellte Anschläge ist die Verschwenkbarkeit des Lagerblockes 60 gegenüber dem U-förmigen Träger 52 beschränkt.

Wird das erfindungsgemäße Schälgerät eingesetzt, liegen die Führungsrollen 16 bzw. 64 an einem zu bearbeitenden Gegenstand R an und werden um den Umfang des zu schälenden Gegenstandes R bewegt. In Abhängigkeit von der Bewegungsrichtung des Schälgerätes wird der Lagerblock bzw. Wagen 60 verschwenkt. Durch die exzentrische Lagerung des Lagerblockes 60 wird dieser auf Grund der Drehbewegung um den zu bearbeitenden Gegenstand R soweit verschwenkt, bis dieser an den vorstehend erwähnten Vorsprüngen anstößt. Auf diese Weise werden die Achsen 62 der Führungsrollen 64 schräg zu dem schälenden Gegenstand R ausgerichtet, so dass das Schälgerät in einer Schraubenbewegung um den zu schälenden Gegenstand R bewegt wird.

Für den Fall, dass nicht der gesamte Umfang eines zu bearbeitenden Gegenstandes R geschält werden soll, sondern nur ein Ausschnitt davon, kann dies durch einen Wechsel der Bewegungsrichtung des Schälgerätes um den zu bearbeitenden Gegenstand R realisiert werden. Durch den Wechsel der Bewegungsrichtung wird auch der Lagerblock 60 mit den Führungsrollen 64 verschwenkt, so dass trotz Änderung des Umfangs Bewegung des Schälgerätes einer Axialbewegung des Schälgerätes realisiert werden kann.

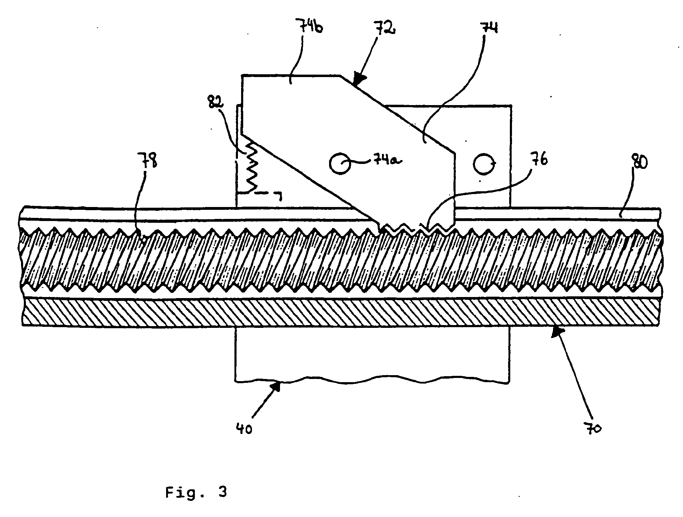

Die Schäleinheit 40 kann mit einem in Figur 3 dargestellten Schnappverschluss 72 aufgebildet sein, der an dem dem Schälkopf 44 gegenüberliegenden Ende des Tragarmes 42 in einer Erweiterung 42c des Tragarmes 42 angeordnet ist. Der Schnappverschluss 72 umfasst einen Hebel 74, der um eine Achse 74a schwenkbar in der Schäleinheit 40 gelagert ist. An einem Ende des Hebels 74 ist ein Gewindeabschnitt 76 ausgebildet, der mit einer Spindel 78 des Spindeltriebes ein Eingriff anbringbar ist. Der Hebel 74 erstreckt sich dabei mit seinem den Gewindeabschnitt 76 tragenden Ende durch die schlitzförmige Öffnung 80 der Trageinheit 70 in den Spindeltrieb hinein. Die Öffnung weist dabei eine Breite auf, die wenigstens der Bereite des Gewindeabschnitts 76, also beispielsweise dem Durchmesser der Spindel 78 entspricht. Der andere Hebelarm des Hebels 74 wird durch eine mit der Schäleinheit 40 verbundene Feder 82 so beaufschlagt, dass der Gewindeabschnitt 76 gegen die Spindel 78 gedrückt wird.

Weiterhin ist an dem Hebel 74 ein Bereich 74b ausgebildet, der aus der Schäleinheit 40 herausragt. Wird manuell auf diesem Bereich des Hebels 74 gedrückt, so verschwenkt der Hebel 74 gegen die Kraft der Feder 82 in Figur 3 gegen den Uhrzeigersinn. Der Gewindeabschnitt 76 gelangt damit außer Eingriff der Spindel 78, so dass die Schäleinheit 40 ausschließlich auf der Spindelführung aufliegt, die durch die Außenseite der Trageinheit 70 beidseits des Schlitzes bzw. der schlitzförmigen Öffnung 80 gebildet wird. Die Schäleinheit 40 lässt sich somit frei auf der Spindelführung verschieben. Die Bewegung des Hebels 74 bei Betätigung des Bereichs des Schnappverschlusses 72 wird durch einen Anschlag begrenzt.

Die Spindel 78 ist in der Spindelführung an dem Ende der Abstützeinheit 10 frei drehbar gelagert. Wie aus Figur 4 ersichtlich, ist die Spindel 78 auch an dem der Abstützeinheit 10 abgewandten Ende in der Spindelführung frei drehbar gelagert. Außerhalb der Spindelführung mündet die Spindel 78 an ihrem der Abstützeinheit 10 abgewandtem Ende in einen Betätigungsgriff 82, über dem die Spindel 78 manuell drehbar ist. Auf der in den Figuren 4 und 5 oberen Seite der Spindelführung ist die schlitzförmige Öffnung 80 vorgesehen, die sich im Wesentlichen über die gesamte Länge des Spindeltriebs erstreckt.

An der Seite des Betätigungsgriffes 82 ist in einer Lagerung der Spindel in der Spindelführung in einem Absatz in der Spindel 78 einer Tellerfederpaket 84 aus mehreren Tellerfedern vorgesehen. Auch an dem Betätigungsgriff 82 gegenüberliegenden Ende der Spindeltriebs ist, wie dies in Figur 5 gezeigt ist, ein Tellerfederpaket 86 zwischen der Spindelführung und Spindel 78 vorgesehen. Das Tellerfederpaket 86 stützt sich dabei gegen ein Lager 90 der Spindelführung und ein an der Spindel 78 befestigtes Indikatorelement 82 ab, das im unbelasteten Zustand der Tellerfederpakete 84, 86 aus der Spindelführung herausragt.

Die Spindel 78 ist somit innerhalb der Spindelführung gegen die Kraft der Tellerfederpakete 84, 86 auf das Lager 90 zu (nach rechts in den Figuren) verschiebbar. Damit wird auch das Indikatorelement 92, das mit der Spindel 78 verbunden ist, vollständig in die Spindelführung hineinbewegt. Bei einer vorbestimmten auf die Spindel 78 und die Tellerfederpaket 84, 86 wirkende Kraft wird das Indikatorelement 92 genau soweit verschoben, dass seine abwandte Seite mit der Außenkante der Spindelführung fluchtet. Einem Benutzer kann somit über die Position des Indikatorelements 92 die Anzeige der definierten Kraft ermöglicht werden, mit der die Spindel 78 gegen die Spindelführung gedrückt wird.

## Patentansprüche

1. Schälgerät für rohrförmige Gegenstände, insbesondere für Kunststoffrohre, mit mindestens einer Abstützeinheit (10) zum Abstützen des zu schälenden Gegenstandes (R), mit einer Schäleinheit (40), die einen Schälkopf (44) mit wenigstens einer Messerbaugruppe (46) und mindestens einer Führungsbaugruppe (48) aufweist, und mit einer Trageinheit (70), an der die Abstützeinheit (10) und die Schälkopfeinheit (40) beabstandet zueinander gehalten sind,
**dadurch gekennzeichnet, dass** der Schälkopf (44) um eine Schwenkachse (50) schwenkbar ist, die zumindest annährend senkrecht zu der von der Abstützeinheit (10) und der Schäleinheit (40) aufgespannten Ebene verläuft.

2. Schälgerät nach Anspruch 1,
**dadurch gekennzeichnet, dass** der um die Schwenkachse (50) schwenkbare Schälkopf (44) in eine Grundstellung elastisch, vorzugsweise durch wenigstens ein Federelement vorgespannt ist.

3. Schälgerät nach Anspruch 1 oder 2,
**dadurch gekennzeichnet, dass** die Schwenkachse (50) in Richtung parallel zu der von der Abstützeinheit (10) und der Schäleinheit (40) aufgespannten Ebene beabstandet zu dem Kontaktbereich der Führungsbaugruppe (48) mit dem zu schälenden Gegenstand (R) an der Schäleinheit (40) vorgesehen ist.

4. Schälgerät nach einem der Ansprüche 1 bis 3,
**dadurch gekennzeichnet, dass** die Führungsbaugruppe (48) des Schälkopfes (44) mindestens zwei in Schälrichtung hintereinander angeordnete Führungselemente aufweist und dass die Schwenkachse (50) zwischen den beiden Führungselementen, vorzugsweise mittig hierzu angeordnet ist.

5. Schälgerät nach einem der Ansprüche 1 bis 4,
**dadurch gekennzeichnet, dass** die Führungsbaugruppe (48) des Schälkopfes (44) zwei Paare an Führungselementen (64) aufweist, deren Anbringungspunkte an dem Schälkopf (44) ein Rechteck aufspannen, und dass die Schwenkachse (50) zwischen den beiden Führungselementpaaren (64), vorzugsweise mittig hierzu angeordnet ist.

6. Schälgerät nach einem der Ansprüche 1 bis 5,
**dadurch gekennzeichnet, dass** die Schälkopfeinheit (40) und/oder die Abstützeinheit (10) entlang der Trageinheit (70) zum Einstellen des Abstandes zwischen der Schäleinheit (40) und der Abstützeinheit (10) verschiebbar angeordnet sind.

7. Schälgerät nach einem der Ansprüche 1 bis 6,
**dadurch gekennzeichnet, dass** die Führungsbaugruppe (48) des Schälkopfes (44) einen Lagerblock (60) aufweist, an dem das wenigstens eine Führungselement (64) vorzugsweise federnd gelagert ist und der vorzugsweise an dem Schälkopf (44) um eine zu der Schwenkachse (50) senkrechte sowie exzentrisch angeordnete Achse frei schwenkbar befestigt ist.

8. Schälgerät nach einem der Ansprüche 1 bis 7,
**dadurch gekennzeichnet, dass** die Messerbaugruppe (58) ein Schälmesser aufweist, das eine in einem Gleitschuh (56) aufgenommene, mit diesem einstückig ausgebildete Klinge (54) enthält, und dass der Gleitschuh (56) an dem Schälkopf (44) lösbar befestigt ist.

9. Schälgerät nach einem der Ansprüche 1 bis 8,
**dadurch gekennzeichnet, dass** der Schälkopf (44) um eine Kippachse kippbar ist, die parallel zu der von der Abstützeinheit (10) und der Schäleinheit (40) aufgespannten Ebene verläuft.

10. Schälgerät nach Anspruch 9,
**dadurch gekennzeichnet, dass** die Schwenkachse (50) und die Kippachse ein Kreuzgelenk bilden.

## Claims

1. Apparatus for paring tubular articles, in particular for plastics material tubes, comprising at least one support unit (10) for supporting the article (R) to be pared, with a paring unit (40) comprising a paring head (44) with at least one blade assembly (46) and at least one guide assembly (48), and with a carrier unit (70) for holding the support unit (10) and the paring head unit (40) in a spaced apart relationship, **characterised in that** the paring head (44) is able to pivot about a pivot axis (50) which extends at least approximately perpendicularly to a plane spanned by the support unit (10) and the paring unit (40).

2. Paring apparatus according to claim 1, **characterised in that** the paring head (44), which is able to pivot about the pivot axis (50), is resiliently biased into a basic position, preferably by at least one spring element.

3. Paring apparatus according to either claim 1 or claim 2, **characterised in that** the pivot axis (50) is provided on the paring unit (40) spaced apart from the region of contact between the guide assembly (48) and the article (R) to be pared, in a direction parallel to the plane spanned by the support unit (10) and the paring unit (40).

4. Paring apparatus according to any one of claims 1 to 3, **characterised in that** the guide assembly (48) of the paring head (44) comprises at least two guide elements arranged successively in the paring direction and **in that** the pivot axis (50) is positioned between the two guide elements, preferably centrally relative thereto.

5. Paring apparatus according to any one of claims 1 to 4, **characterised in that** the guide assembly (48) of the paring head (44) comprises two pairs of guide elements (64), of which the points for mounting on the paring head (44) span a rectangle, and **in that** the pivot axis (50) is positioned between the two pairs of guide elements (64), preferably centrally relative thereto.

6. Paring apparatus according to any one of claims 1 to 5, **characterised in that** the paring head unit (40) and/or the support unit (10) are arranged displaceably along the carrier unit (70) for adjusting the spacing between the paring unit (40) and the support unit (10).

7. Paring apparatus according to any one of claims 1 to 6, **characterised in that** the guide assembly (48) of the paring head (44) comprises a mounting block (60) on which the at least one guide element (64) is preferably resiliently mounted and is preferably fixed to the paring head (44) in such a way that it may pivot freely about an axis that is arranged perpendicular and eccentrically with respect to the pivot axis (50).

8. Paring apparatus according to any one of claims 1 to 7, **characterised in that** the blade assembly (58) comprises a paring blade containing a knife member (54) received in and formed in one piece with a slide shoe (56), and **in that** the slide shoe (56) is releasably fixed to the paring head (44).

9. Paring apparatus according to any one of claims 1 to 8, **characterised in that** the paring head (44) is tiltable about a tilt axis which extends parallel to the plane spanned by the support unit (10) and the paring unit (40).

10. Paring apparatus according to claim 9, **characterised in that** the pivot axis (50) and the tilt axis form a universal joint.

## Revendications

1. Dispositif de raclage pour objets de forme tubulaire, en particulier pour tubes en matière plastique, avec au moins une unité d'appui (10) pour appuyer l'objet à racler (R) avec une unité de raclage (40) qui présente une tête de raclage (44) avec au moins un groupe de couteaux (46) et au moins un groupe de guidage (48) et avec une unité porteuse (70) sur laquelle sont maintenues l'unité d'appui (10) et l'unité de tête de raclage (40) à une certaine distance l'une de l'autre,
**caractérisé**
**en ce que** la tête de raclage (44) peut être orientée autour d'un axe de pivotement (50), qui passe au moins à peu près perpendiculairement au plan défini par l'unité d'appui (10) et l'unité de raclage (40).

2. Dispositif de raclage selon la revendication 1,
**caractérisé**
**en ce que** la tête de raclage pivotante (44) autour de l'axe de pivotement (50) est précontrainte de manière élastique dans une position de base, de préférence par au moins un élément à ressort.

3. Dispositif de raclage selon la revendication 1 ou 2,
**caractérisé en ce que** l'axe de pivotement (50) est prévu avec l'objet à racler (R) sur l'unité de raclage (40) dans une direction parallèle au plan défini par l'unité d'appui (10) et l'unité de raclage (40), à une certaine distance de la zone de contact du groupe de guidage (48).

4. Appareil de raclage selon l'une quelconque des revendications 1 à 3,
**caractérisé en ce que** le groupe de guidage (48) de la tête de raclage (44) présente au moins deux éléments de guidage disposés l'un derrière l'autre dans le sens de raclage et **en ce que** l'axe de pivotement (50) est disposé entre les deux éléments de guidage de préférence au milieu de ceux-ci.

5. Appareil de raclage selon l'une quelconque des revendications 1 à 4,
**caractérisé**
**en ce que** le groupe de guidage (48) de la tête de raclage (44) présente deux paires d'éléments de guidage (64) dont les points d'attache fixent un rectangle à la tête de raclage (44) et en ce que l'axe de pivotement (50) est disposé entre les deux paires d'éléments de guidage (64) de préférence au milieu de ceux-ci.

6. Appareil de raclage selon l'une quelconque des revendications 1 à 5,
**caractérisé en ce que** l'unité de tête de raclage (40) et/ou l'unité d'appui (10) sont disposées de manière mobile le long de l'unité porteuse (70) pour le réglage de l'écart entre l'unité de raclage (40) et l'unité d'appui (10).

7. Appareil de raclage selon l'une quelconque des revendications 1 à 6,
**caractérisé en ce que** le groupe de guidage (48) de la tête de raclage (44) présente un bloc de paliers (60) sur lequel au moins un élément de guidage (64) est logé de préférence de manière élastique et qui est fixé, de préférence à la tête de raclage (44), de manière à être libre de pivoter autour d'un axe disposé aussi bien perpendiculairement qu'excentré par rapport l'axe de pivotement (50).

8. Appareil de raclage selon l'une quelconque des revendications 1 à 7,
**caractérisé en ce que** le groupe de couteaux (58) présente un couteau de raclage, qui comprend une lame (54) logée dans un patin de guidage (56) réalisée, avec celui-ci, de manière monobloc et **en ce que** le patin (56) est fixé à la tête de raclage (44) de manière amovible.

9. Appareil de raclage selon l'une quelconque des revendications 1 à 8,
**caractérisé en ce que** la tête de raclage (44) peut être basculée autour d'un axe de basculement qui s'étend parallèlement au plan défini par l'unité d'appui (10) et l'unité de raclage (40).

10. Dispositif de raclage selon la revendication 9,
**caractérisé en ce que** l'axe de pivotement (50) et l'axe de basculement forment une articulation à cardan.
